(19) Europäisches Patentamt
European Patent Office
Office européen des brevets

(11) **EP 4 325 086 A1**

(12) **EUROPEAN PATENT APPLICATION**

(43) Date of publication:
**21.02.2024 Bulletin 2024/08**

(21) Application number: **22191074.8**

(22) Date of filing: **18.08.2022**

(51) International Patent Classification (IPC):
**F16H 3/097** (2006.01)    **F16H 3/091** (2006.01)
**F16H 3/08** (2006.01)

(52) Cooperative Patent Classification (CPC):
**F16H 3/097; F16H 3/0915;** F16H 2003/0826;
F16H 2200/0091; F16H 2200/0095

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **VOLVO TRUCK CORPORATION**
**405 08 Göteborg (SE)**

(72) Inventor: **HEDMAN, Anders**
**442 67 Marstrand (SE)**

(74) Representative: **Valea AB**
**Box 1098**
**405 23 Göteborg (SE)**

(54) **A TRANSMISSION FOR A VEHICLE**

(57)    A transmission (120) for a vehicle, comprising:
- an input shaft (1), a main shaft (2), and a countershaft (3), the main shaft being coaxial with the input shaft and the countershaft being parallel therewith,
- first and second primary gear planes (P1, P2) arranged for torque transfer between the input shaft and the countershaft,
- at least one secondary gear plane (S1, S2, S3) arranged for torque transfer between the countershaft and the main shaft.

The transmission further comprises a reverse shaft (4) arranged in parallel with the main shaft, wherein the first primary gear plane comprises a first reverse shaft gearwheel (41) arranged on the reverse shaft, and wherein the second primary gear plane comprises a second reverse shaft gearwheel (42) arranged on the reverse shaft, the second reverse shaft gearwheel being selectively rotationally connectable to the first reverse shaft gearwheel so as to engage a reverse gear of the transmission.

Fig. 4

**EP 4 325 086 A1**

## Description

TECHNICAL FIELD

The invention relates to a transmission, a transmission control unit, and a vehicle.

The invention can be applied in heavy-duty vehicles, such as trucks, buses, and construction equipment. Although the invention will be described with respect to a truck, the invention is not restricted to this type of vehicle, but may also be used in other vehicles such as buses, trailers, wheel loaders, excavators, etc.

BACKGROUND

Down-speeding of engines, i.e., operating the engine at a low rotational speed with high torque, generally improves drivability and reduces fuel consumption. In heavy-duty vehicles, down-speeding of the engine has therefore become increasingly common in order to save fuel and reduce emissions. Such down-speeding requires an increased gear ratio coverage in a transmission of the vehicle in order to maintain startability. Additional gears are therefore required. However, such additional gears risk to make the transmission longer, heavier, and more expensive. Furthermore, by increasing the length of shafts within the transmission, the shafts become weaker and more prone to deflection when loaded. In view of this, it would be desirable to achieve a length-neutral design of the transmission, in which optional additional gears may be provided.

SUMMARY

A primary object of the invention is to provide a transmission for a vehicle which is in at least some aspect improved in comparison to conventional transmissions. In particular, it is an object to provide such a transmission which can provide additional gear ratios without increasing a length of the transmission, and which is suitable for use with a down-speeded engine. Another object is to provide such a transmission that does not require any additional housing modules or similar. Yet another object is to provide a transmission which is able to provide more than one reverse gear ratio.

According to a first aspect of the invention, at least the primary object is achieved by a transmission according to claim 1. Hence, a transmission for a vehicle is provided, comprising:

- an input shaft, a main shaft, and a countershaft, the main shaft being coaxial with the input shaft and the countershaft being parallel therewith,
- first and second primary gear planes arranged for torque transfer between the input shaft and the countershaft, and
- at least one secondary gear plane arranged for torque transfer between the countershaft and the main shaft.

The transmission further comprises a reverse shaft arranged in parallel with the main shaft, wherein the first primary gear plane comprises a first reverse shaft gearwheel arranged on the reverse shaft, and wherein the second primary gear plane comprises a second reverse shaft gearwheel arranged on the reverse shaft, the second reverse shaft gearwheel being selectively rotationally connectable to the first reverse shaft gearwheel so as to engage a reverse gear of the transmission.

By providing a reverse shaft arranged in parallel with the main shaft and arranging at least two gearwheels on the reverse shaft as described above, a relatively space-efficient transmission providing several reverse gear ratios is achieved.

The transmission according to the invention is of splitter type, i.e., it comprises two primary gear planes for torque transfer between the input shaft and the countershaft. It further comprises one or more secondary gear planes for torque transmission between the countershaft and the main shaft. Each primary gear plane may comprise a respective input gearwheel which is selectively rotationally connectable to the input shaft using a primary gear engaging device. The primary gear engaging device in combination with reverse and countershaft gear engaging devices are used to select a torque path for torque transmission from the input shaft to the countershaft at either a forward or a reverse gear.

The transmission is configured such that, when a reverse gear is engaged, torque is transferred from the input shaft to the countershaft via an even number of gear meshes, such as two or four gear meshes, resulting in the countershaft rotating in the same direction as the input shaft. Hence, torque is transferred via the reverse shaft. The main shaft and the input shaft will thereby rotate in opposite directions when torque is transferred from the countershaft to the main shaft via a single gear mesh in one of the at least one secondary gear plane.

By a gearwheel being "arranged on" a shaft is intended a gearwheel being coaxial with the shaft, and arranged either rotatably on the shaft or permanently fixed thereto. When rotatably arranged, the gearwheel may be possible to rotationally connect to the shaft using a gear engaging device such as a sleeve or similar.

By the term "rotationally connected" is intended "connected for common rotation".

By a "driving connection" of two rotating parts is herein intended that torque can be transmitted between the parts, and that the rotational speeds of the parts are proportional. When two gearwheels are drivingly connected, torque can be transmitted between the gearwheels. This may be achieved by the gearwheels being in meshing engagement, or by a first gearwheel being in meshing engagement with a second gearwheel, which is in turn in meshing connection with a third gearwheel, or by a first gearwheel being in meshing engagement with a second gearwheel, which is rigidly connected to a third gearwheel, which is in turn in meshing connection with a fourth gearwheel. Thus, in order to be drivingly connected, it is not necessary that two gearwheels are in meshing engagement. It is sufficient that the rotation of one of the gearwheels inevitably leads to the rotation of the other one of the gearwheels.

Optionally, the first primary gear plane comprises a first input gearwheel arranged coaxially with the input shaft, and a first countershaft gearwheel arranged on the countershaft, and the second primary gear plane comprises a second input gearwheel arranged coaxially with the input shaft, and a second countershaft gearwheel arranged on the countershaft. For example, the second input gearwheel may be arranged coaxially on the input shaft.

Optionally, the first reverse shaft gearwheel and the first countershaft gearwheel are in meshing engagement with one another, and the second reverse shaft gearwheel and the second input gearwheel are in meshing engagement with one another. The transmission may herein be configured as a direct gear transmission, with a top forward gear being a direct gear.

Alternatively, the second reverse shaft gearwheel and the second countershaft gearwheel may be in meshing engagement with one another, and the first reverse shaft gearwheel and the first input gearwheel may be in meshing engagement with one another. The transmission may herein be configured as an overdrive transmission, with a top forward gear in which torque is transferred via the countershaft.

By a meshing engagement is herein intended a permanent meshing engagement.

In both of the above configurations, the transmission is configured such that an even number of gear meshes are provided for transferring torque from the input shaft to the countershaft via the reverse shaft, resulting in the countershaft and the input shaft rotating in the same direction. Hence, when a single gear mesh is used to transfer torque from the countershaft to the main shaft, a reverse gear is achieved.

Optionally, one of the first and second countershaft gearwheels is rotationally fixed to the countershaft, and the other one of the first and second countershaft gearwheels is a rotatable countershaft gearwheel arranged rotatably on and selectively rotationally connectable to the countershaft so as to engage a forward gear. When the rotatable countershaft gearwheel is not rotationally connected to the countershaft, a reverse gear may be engaged.

Optionally, the transmission further comprises a reverse gear engaging device configured to selectively rotationally connect and disconnect the first and second reverse shaft gearwheels to/from one another, and a countershaft gear engaging device configured to selectively rotationally connect and disconnect the rotatable countershaft gearwheel to/from the countershaft.

Optionally, the countershaft gear engaging device is configured to rotationally connect the rotatable countershaft gearwheel to the countershaft only when the reverse gear engaging device is in a neutral position, and the reverse gear engaging device is configured to rotationally connect the first and second reverse shaft gearwheels to one another only when the countershaft gear engaging device is in a neutral position. In its neutral position, the countershaft gear engaging device rotationally disconnects the rotatable countershaft gearwheel from the countershaft so that it may rotate with respect thereto. Likewise, in its neutral position, the reverse gear engaging device rotationally disconnects the first and second reverse shaft gearwheels from one another, such as by rotationally disconnecting one of the reverse shaft gearwheels from the reverse shaft.

Optionally, the reverse and countershaft gear engaging devices are arranged to be movable in common by a single actuator, such as by being movable by two shift forks provided on a common shift rod, movable by the single actuator.

Optionally, the reverse and countershaft gear engaging devices are selectively movable to a common neutral position in which the first and second reverse shaft gearwheels are rotationally disconnected from one another and in which the rotatable countershaft gearwheel is rotationally disconnected from the countershaft.

Optionally, a number of gear teeth of the first reverse shaft gearwheel differs from a theoretical number of gear teeth of the first reverse shaft gearwheel by at least one gear tooth, such as by a number of 1-3 gear teeth, wherein the theoretical number of gear teeth is determined from a number of gear teeth of the first input gearwheel and of the first countershaft gearwheel, and from centre-to-centre distances between the gearwheels of the first primary gear plane.

Optionally, a number of gear teeth of the second reverse shaft gearwheel differs from a theoretical number of gear teeth of the second reverse shaft gearwheel by at least one gear tooth, such as by a number of 1-3 gear teeth, wherein the theoretical number of gear teeth is determined from a number of gear teeth of the second input gearwheel and of the second countershaft gearwheel, and from centre-to-centre distances between the gearwheels of the second primary gear plane.

Optionally, the number of gear teeth of the first reverse shaft gearwheel is smaller than the theoretical number of gear teeth of the first reverse shaft gearwheel, and the number of gear teeth of the second reverse shaft gearwheel is larger than the theoretical number of gear teeth of the second reverse shaft gearwheel. The rotatable countershaft gearwheel may herein preferably be the second countershaft gearwheel, located in the second primary gear plane. This configuration is beneficial when, in reverse gears, power flows from the input shaft to the countershaft via the second primary gear plane followed by the first primary gear plane when the vehicle is being propelled. A relatively large number of gear teeth on the second reverse shaft gearwheel means that the reverse shaft will rotate relatively slowly, in comparison to a configuration with a smaller number of gear teeth.

Hence, a larger speed reduction is possible. The relatively small number of gear teeth on the first reverse shaft gearwheel has the same effect.

Alternatively, the number of gear teeth of the first reverse shaft gearwheel may be larger than the theoretical number of gear teeth of the first reverse shaft gearwheel, and the number of gear teeth of the second reverse shaft gearwheel may be smaller than the theoretical number of gear teeth of the second reverse shaft gearwheel. The rotatable countershaft gearwheel may herein preferably be the first countershaft gearwheel, located in the first primary gear plane. This configuration is beneficial when, in reverse gears, power flows from the input shaft to the countershaft via the first primary gear plane followed by the second primary gear plane when the vehicle is being propelled. In this case, it is beneficial with a relatively large number of gear teeth on the first reverse shaft gearwheel to obtain a large speed reduction at reverse gears.

Optionally, the rotatable countershaft gearwheel is located in the one of the primary gear planes in which the number of gear teeth of the reverse shaft gearwheel is larger than the theoretical number of gear teeth.

Optionally, the at least one secondary gear plane comprises at least a first secondary gear plane and a second secondary gear plane, and preferably a third secondary gear plane. The third secondary gear plane may be arranged for providing a crawler gear. A "crawler gear" is to be understood as a low forward gear, with a speed reduction ratio that is larger than for the other gears, that is designed to be used infrequently, e.g., at low-speed manoeuvres or occasional up-hill start-offs.

Optionally, the transmission further comprises a range gear configured to selectively drivingly connect the main shaft to an output shaft at a high range gear or a low range gear. The range gear may comprise a planetary gear set or a parallel shafts gear set.

According to a second aspect of the invention, a transmission control unit for controlling a transmission according to the first aspect is provided, the transmission comprising the countershaft gear engaging device. The transmission control unit is configured to control the countershaft gear engaging device to a neutral position when a direct forward gear of the transmission is engaged. This makes the countershaft and/or the countershaft gearwheels non-driven, i.e., drivingly disconnected from the input shaft. Hence, in the direct forward gear, splash losses resulting from rotation of the countershaft gearwheels in a wet sump of the transmission can be reduced by setting the countershaft gear engaging device to the neutral position. The transmission control unit may further comprise actuators and electronic circuitry for controlling the actuators and for communicating with other systems and control units of the vehicle, etc.

According to a third aspect of the invention, a vehicle comprising a transmission according to the first aspect is provided. The vehicle may further comprise a transmission control unit according to the second aspect. The vehicle may, e.g., be a heavy-duty vehicle such as a truck, a bus, or a working machine. The vehicle may be driven by a combustion engine and/or it may be a partly or fully electrified vehicle comprising one or more electric motors. Advantages and advantageous features of the vehicle according to the invention appear from the above description of the first aspect of the invention.

Further advantages and advantageous features of the invention are disclosed in the following description and in the dependent claims.

BRIEF DESCRIPTION OF THE DRAWINGS

With reference to the appended drawings, below follows a more detailed description of embodiments of the invention cited as examples.

In the drawings:

Fig. 1    schematically illustrates a vehicle according to an embodiment of the invention,

Fig. 2a   schematically illustrates a transmission according to a first embodiment of the invention,

Fig. 2b   schematically illustrates the shafts of the transmission of Fig. 2a in a side view,

Fig. 3    illustrates an exemplary power flow in the transmission in Fig. 2a,

Fig. 4    illustrates other exemplary power flows in the transmission in Fig. 2a,

Fig. 5    schematically illustrates a transmission according to a second embodiment,

Fig. 6    illustrates exemplary power flows in the transmission in Fig. 5,

Fig. 7    schematically illustrates a transmission according to a third embodiment, and

Fig. 8    schematically illustrates a transmission according to a fourth embodiment.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

## DETAILED DESCRIPTION OF EXAMPLE EMBODIMENTS OF THE INVENTION

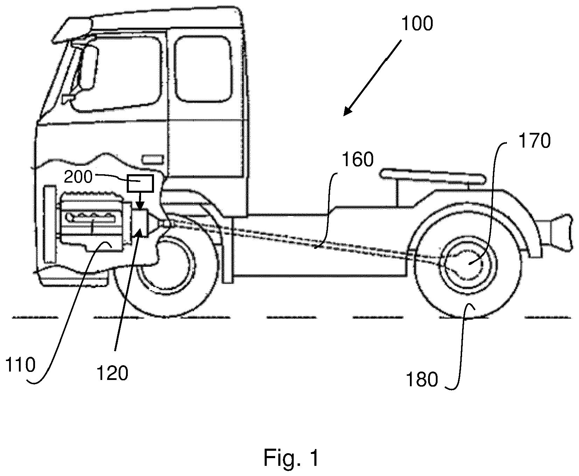

Fig. 1 depicts a vehicle 100 according to an example embodiment of an aspect of the present invention. The vehicle 100 is here a heavy-duty truck, more specifically a towing truck, or tractor, for pulling one or more trailers (not shown). As mentioned in the above, the vehicle may be any type of vehicle, including but not limited to buses, wheel loaders, excavators, passenger cars etc.

The vehicle 100 comprises a propulsion unit 110, which here is an internal combustion engine (ICE), and a transmission 120 according to an example embodiment of the invention drivingly connected or connectable to the propulsion unit 110. A transmission control unit 200 is provided for controlling the transmission 120. The transmission 120 is arranged to transfer torque from the propulsion unit 110 to a propeller shaft 160 connecting the transmission 120 to a driven axle 170 that drives driven wheels 180 of the vehicle 100. The drive wheels 180 are here rear wheels of the vehicle 100. Even though drive wheels 180 are shown in this embodiment, it shall be understood that any other type of ground engaging means may be used, such as crawler members of an excavator.

Of course, the vehicle may have many different configurations. By way of example, the vehicle may comprise one or more electric propulsion units in addition to, or instead of, the ICE. Furthermore, the transmission 120 does not need to be provided at a front of the vehicle, but may, e.g., be combined with a rear axle of the vehicle.

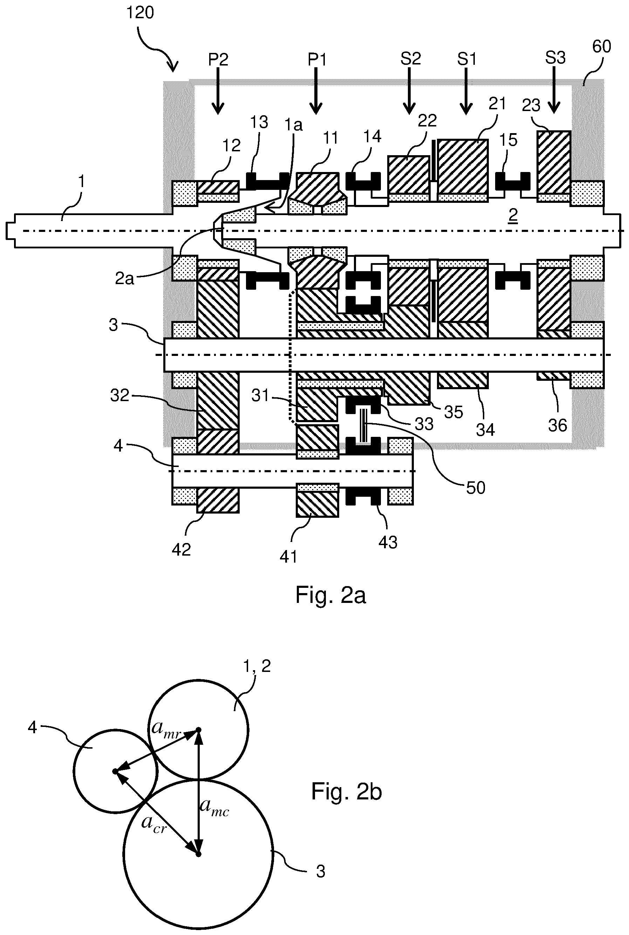

Fig. 2a illustrates a transmission 120 according to a first embodiment of the invention. The transmission 120 comprises an input shaft 1, drivingly connected or connectable to a propulsion unit such as the propulsion unit 110 (not illustrated in Fig. 2a). A main shaft 2 extends coaxially with the input shaft 1, a first end 2a of the main shaft 2 being rotatably received in a pocket 1a of the input shaft 1. A countershaft 3 and a reverse shaft 4 extend in parallel with one another and with the input shaft 1 and the main shaft 2. The shafts 1, 2, 3, 4 are mounted to a transmission housing 60 using bearings, shown as dotted areas in the figures.

The transmission 120 is a splitter type transmission, having two primary gear planes P1, P2 and several secondary gear planes S1, S2, S3. Thus, first and second primary gear planes P1, P2 are arranged for torque transfer between the input shaft 1 and the countershaft 3. The first primary gear plane P1 comprises a first input gearwheel 11 arranged coaxially with the input shaft 1 and a first countershaft gearwheel 31 rotatably arranged on the countershaft 3. In the illustrated first embodiment, the first input gearwheel 11 is rotatably arranged on the main shaft 2. The first primary gear plane P1 further comprises a first reverse shaft gearwheel 41 rotatably arranged on the reverse shaft 4.

The second primary gear plane P2 comprises a second input gearwheel 12 arranged coaxially with the input shaft 1 and a second countershaft gearwheel 32 arranged on and fixed to the countershaft 3. In the illustrated first embodiment, the second input gearwheel 12 is rotatably arranged on the input shaft 1. The second primary gear plane P2 further comprises a second reverse shaft gearwheel 42 arranged on and fixed to the reverse shaft 4.

In the first primary gear plane P1, the first reverse shaft gearwheel 41 and the first input gearwheel 11 are in meshing engagement with one another, as illustrated by the dotted line. The first reverse shaft gearwheel 41 is not in meshing engagement with the first countershaft gearwheel 31. The first countershaft gearwheel 31 is in meshing engagement with the first input gearwheel 11. Hence, the first input gearwheel 11 is in meshing engagement with both of the first countershaft gearwheel 31 and the first reverse shaft gearwheel 41.

In the second primary gear plane P2, the second reverse shaft gearwheel 42 and the second countershaft gearwheel 32 are in meshing engagement with one another. The second countershaft gearwheel 32 is further in meshing engagement with the second input gearwheel 12. The second input gearwheel 12 is not in meshing engagement with the second reverse shaft gearwheel 42. Hence, the first countershaft gearwheel 32 is in meshing engagement with both of the second reverse shaft gearwheel 42 and the second input gearwheel 12.

First, second and third secondary gear planes S1, S2, S3 are further arranged for torque transfer between the countershaft 3 and the main shaft 2, wherein the third secondary gear plane S3 provides a gear ratio corresponding to a crawler gear of the transmission 120. The first, second and third secondary gear planes S1, S2, S3 comprise a first, second and third main gearwheel 21, 22, 23, respectively, rotatably arranged on the main shaft 2. The first, second and third secondary gear planes S1, S2, S3 further comprise a first, second and third secondary countershaft gearwheel 34, 35, 36, respectively, arranged on and rotationally fixed to the countershaft 3, each main gearwheel 21, 22, 23 being in meshing engagement with a respective one of the secondary countershaft gearwheels 35, 35, 36. Of course, less than three or more than three secondary gear planes may be provided, such as one, two, or four secondary gear planes.

A first gear engaging device 13 is provided for selectively rotationally connecting one of the first input gearwheel 11 and the second input gearwheel 12 to the input shaft 1. The first gear engaging device 13 is movable between a first position (to the right) in which it rotationally connects the first input gearwheel 11 to the input shaft 1, a second position (to the left) in which it rotationally connects the second input gearwheel 12 to the input shaft 2, and a neutral position (middle), as illustrated in Fig. 2a, in which it rotationally disconnects both of the first and the second input gearwheels 11, 12 from the input shaft 1. The first gear engaging device 13 may also be movable between the first and second positions only, without being settable to a neutral position.

A second gear engaging device 14 is provided for selectively rotationally connecting one of the first input gearwheel 11 and the second main gearwheel 22 to the main shaft 2. In a neutral position, as illustrated in Fig. 2a, the second gear engaging device 14 rotationally disconnects both of the first input gearwheel 11 and the second main gearwheel 22 from the main shaft 2. A third gear engaging device 15 is provided for selectively rotationally connecting one of the first main gearwheel 21 and the third main gearwheel 23 to the main shaft 2. The third gear engaging device 15 is also settable to a neutral position, as illustrated in Fig. 2a.

The transmission 120 further comprises a reverse gear engaging device 43 for selectively rotationally connecting and disconnecting the first and second reverse shaft gearwheels 41, 42 to/from one another. The second reverse shaft gearwheel 42 is thereby selectively rotationally connectable to the first reverse shaft gearwheel 41 so as to engage a reverse gear of the transmission 120. Only when the reverse shaft gearwheels 41, 42 are rotationally connected, a reverse gear may be engaged. In the illustrated embodiment, the reverse gear engaging device 43 rotationally connects and disconnects the first and second reverse shaft gearwheels 41, 42 to/from one another depending on an axial position of the reverse gear engaging device 43.

A countershaft gear engaging device 33 is provided for selectively rotationally connecting and disconnecting the rotatable first countershaft gearwheel 31 to/from the countershaft 3. When the countershaft gear engaging device 33 rotationally connects the first countershaft gearwheel 31 to the countershaft 3, a forward gear may be engaged, although it may also be possible to engage a direct forward gear with the countershaft gear engaging device 33 in a neutral position, as will be further discussed below. In the illustrated embodiment, the countershaft gear engaging device 33 and the reverse gear engaging device 43 are arranged to be movable in common by a single actuator 50, e.g., by being movable by two shift forks (not shown) provided on a common shift rod (not shown), movable by the single actuator 50. In this way, the countershaft gear engaging device 33 and the reverse gear engaging device 43 are movable in common between:

(i) A first position, to the right in Fig. 2a, in which the reverse shaft gearwheels 41, 42 are rotationally disconnected from one another by the first reverse shaft gearwheel 41 being rotationally disconnected from the reverse shaft 4, and in which the first countershaft gearwheel 31 is rotationally connected to the second secondary countershaft gearwheel 35. In the first position, the transmission 120 is configured for torque transmission at a forward gear.

(ii) A second position, to the left in Fig. 2a, in which the reverse shaft gearwheels 41, 42 are rotationally connected to one another by the first reverse shaft gearwheel 41 being rotationally connected to the reverse shaft 4, and in which the first countershaft gearwheel 31 is rotationally disconnected from the second secondary countershaft gearwheel 35.

(iii) A neutral position, in the middle between the first and second positions, in which the reverse shaft gearwheels 41, 42 as well as the first countershaft gearwheel 31 and the second secondary countershaft gearwheel 35 are rotationally disconnected from one another.

The gear engaging devices 13, 14, 15, 33, 43 may, e.g., be sleeve members that may be referred to as clutch sleeves, clutch collars, engaging sleeves, or similar. Gear shifting may be controlled from the transmission control unit 200 using, e.g., electric, hydraulic, or pneumatic actuators to move the shift forks.

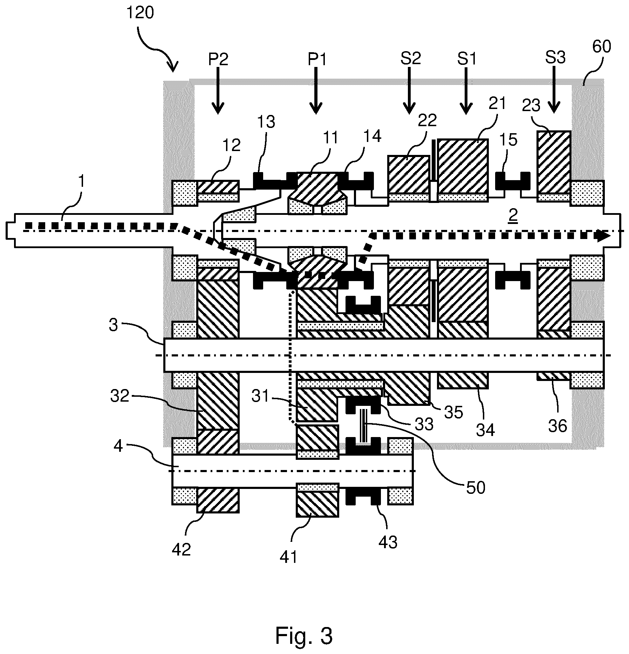

Power flows in a transmission 120 according to the first embodiment is schematically illustrated in Figs. 3-4.

In Fig. 3, the transmission 120 is set to a top forward gear in the form of a direct forward gear by setting the first gear engaging device 13 to the first position and the second gear engaging device 14 to a second position, i.e., to the left. The third gear engaging device 15 as well as the countershaft gear engaging device 33 and the reverse gear engaging device 43 are set to the neutral positions, whereby the countershaft 3 and the gearwheels 32, 34, 35, 36 that are fixed thereon are not drivingly connected to the input shaft 1. Torque is transmitted from the input shaft 1 to the main shaft 2 via the first gear engaging device 13, the first input gearwheel 11, and the second gear engaging device 14, as illustrated by the dotted arrow.

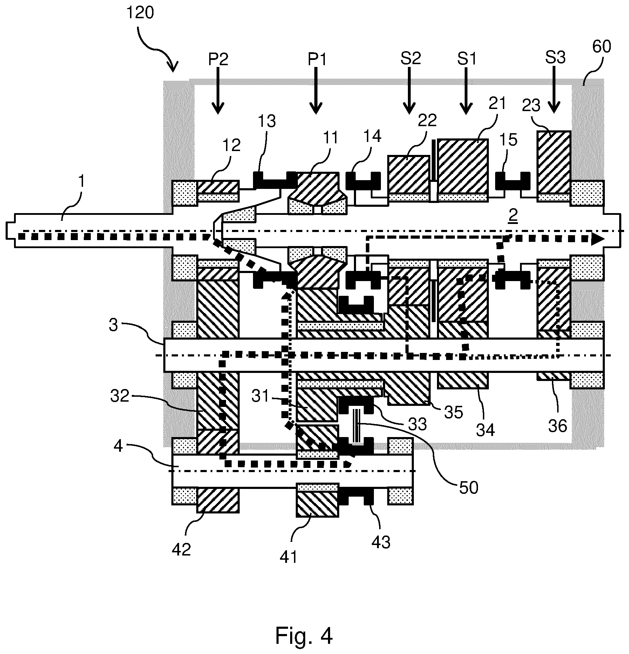

In Fig. 4, power flows at three different reverse gear ratios are illustrated. All reverse gears shown in Fig. 4 are obtained by setting the first gear engaging device 13 to its first position and by setting the countershaft gear engaging device 33 and the reverse gear engaging device 43 to their second position, in which the first reverse shaft gearwheel 41 is rotationally connected to the reverse shaft 4 and in which the first countershaft gearwheel 31 is rotationally disconnected from the countershaft 3. Torque is thereby transmitted from the input shaft 1 to the countershaft 3 via the first gear engaging device 13, the first input gearwheel 11, the first reverse shaft gearwheel 41, the reverse gear engaging device 43, the reverse shaft 4, the second reverse shaft gearwheel 42, and the second countershaft gearwheel 32 as illustrated by the fat dotted arrow. In other words, torque is transmitted in the order of the first primary gear plane P1 followed by the second primary gear plane P2 via two gear meshes. The gear ratio for torque transmission between the countershaft 3 and the main shaft 2 is set by adjusting positions of the second and third gear engaging devices 14, 15. In the illustrated embodiment, three reverse gear ratios are provided by using the first secondary gear plane S1, the second secondary gear plane S2, and the third secondary gear plane S3, respectively. For illustrative purposes only, the second and third gear engaging devices 14, 15 are illustrated in their neutral positions, although their actual positions will of course be adjusted to select the appropriate gear ratio. The fat dotted arrow illustrates power flow in a first reverse gear via the first secondary gear plane S1, the thin dashed line illustrates power flow in a second reverse gear via the second secondary gear plane S2, and the thin dotted line illustrates power flow in a third reverse gear via the third secondary gear plane S3, i.e., using a reverse crawler gear.

Fig. 2b schematically illustrates the input shaft 1 and the main shaft 2, the countershaft 3 and the reverse shaft 4 in a side view, i.e., in a plane perpendicular to longitudinal axes of the shafts 1, 2, 3, 4. Fig. 2b illustrates a first centre-to-centre distance $a_{mr}$ between on the one hand the input shaft 1 and the main shaft 2 and on the other hand the reverse shaft 4, a second centre-to-centre distance $a_{mc}$ between on the one hand the input shaft 1 and the main shaft 2 and on the other hand the countershaft 3, and a third centre-to-centre distance $a_{cr}$ between the reverse shaft 4 and the countershaft 3. In each primary gear plane P1, P2, a theoretical number of gear teeth $z_{41,th}$, $z_{42,th}$ on the reverse shaft gearwheels 41, 42 can be determined from the centre-to-centre distances $a_{mr}$, $a_{mc}$, $a_{cr}$ and a known number of gear teeth $z_{11}$, $z_{12}$ of the input gearwheels 11, 12 and a known number of gear teeth $z_{31}$, $z_{32}$ of the countershaft gearwheels 31, 32 from Equations 1 and 2 below:

$$\frac{a_{mr}}{a_{mc}} = \frac{z_{41,th} + z_{11}}{z_{31} + z_{11}} \qquad \text{(Eq. 1)}$$

$$\frac{a_{cr}}{a_{mc}} = \frac{z_{42,th} + z_{32}}{z_{12} + z_{32}} \qquad \text{(Eq. 2)}$$

The theoretical number of gear teeth is not necessarily an integer. In the first embodiment, an actual number of gear teeth of the first reverse shaft gearwheel 41 should preferably be larger than the theoretical number of gear teeth of the first reverse shaft gearwheel 41, and an actual number of gear teeth of the second reverse shaft gearwheel 42 should be smaller than the theoretical number of gear teeth of the second reverse shaft gearwheel 42. This enables a larger gear ratio when using the reverse shaft 41 for torque transfer, going from the first primary gear plane P1 to the second primary gear plane P2 as illustrated in Fig. 4. For each primary gear plane P1, P2, a difference between the theoretical number and the actual number should preferably be at least one gear tooth, such as 1-3 gear teeth.

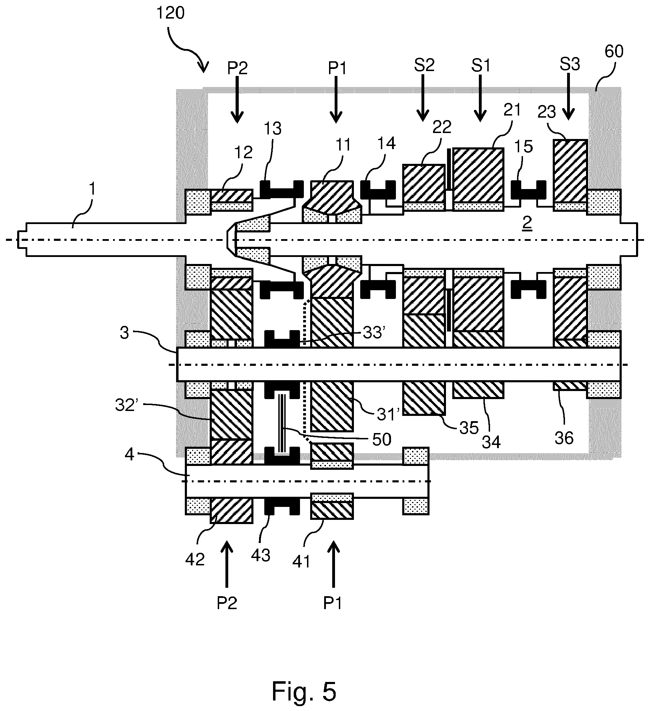

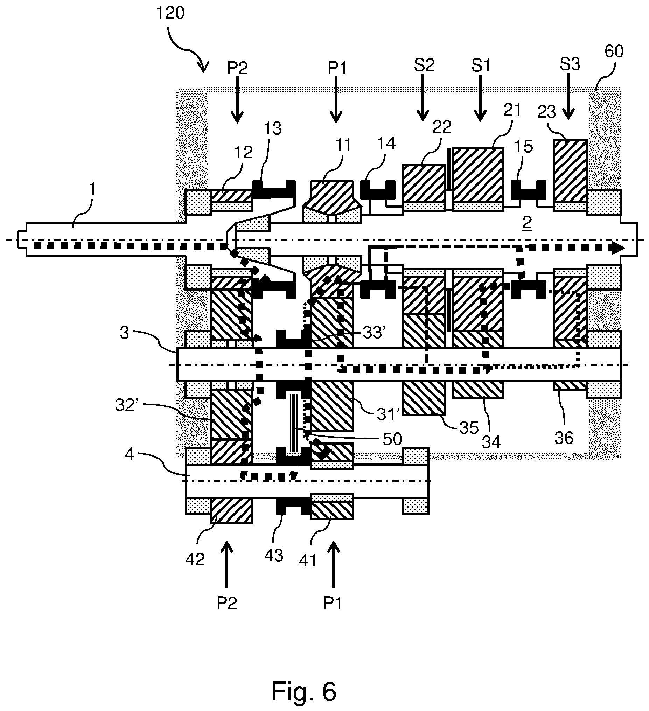

A transmission 120 according to a second embodiment is illustrated in Fig. 5. The transmission 120 according to the second embodiment differs from the first embodiment in that the second countershaft gearwheel 32' of the second primary gear plane P2 is rotatably arranged on the countershaft 3, while the first countershaft gearwheel 31' is fixed on the countershaft 3. Hence, the countershaft gear engaging device 33' is herein arranged to selectively rotationally connect the second countershaft gearwheel 32' to the countershaft 3 so as to engage a forward gear of the transmission 120. Similar to the first embodiment, the first reverse shaft gearwheel 41 is rotatably arranged on the reverse shaft 4 and selectively rotationally connectable thereto using the reverse gear engaging device 43. The reverse gear engaging device 43 is movable in common with the countershaft gear engaging device 33' using a common actuator 50. Hence, in a first position to the right, illustrated in Fig. 6, the first reverse shaft gearwheel 41 is rotationally connected to the reverse shaft 4 and the second countershaft gearwheel 32' is rotationally disconnected from the countershaft 3. A reverse gear may be engaged, in which torque is transmitted from the input shaft 1 to the countershaft 3 via the second primary gear plane P2 followed by the first primary gear plane P1, i.e., using four gear meshes, i.e. from the second input gearwheel 12 to the second countershaft gearwheel 32', from the second countershaft gearwheel 32' to the second reverse shaft gearwheel 42, from the first reverse shaft gearwheel 41 to the first input gearwheel 11 and from the first input gearwheel 11 to the first countershaft gearwheel 31'.

Fig. 6 illustrates power flows at four different reverse gear ratios through the transmission 120 according to the second embodiment. All reverse gears are obtained by setting the first gear engaging device 13 to its second position to the left. In the second embodiment, four reverse gear ratios are provided. Three gear ratios are achieved by using the first secondary gear plane S1, the second secondary gear plane S2, and the third secondary gear plane S3, respectively. An additional gear ratio is achieved by rotationally connecting the first input gearwheel 11 to the main shaft 2 using the second gear engaging device 14. For illustrative purposes only, the second and third gear engaging devices 14, 15 are illustrated in their neutral positions, although their actual positions will of course be adjusted to select the appropriate gear ratio. The fat dotted arrow illustrates power flow in a first reverse gear via the first secondary gear plane S1, the thin dashed line illustrates power flow in a second reverse gear via the second secondary gear plane S2, the solid line illustrates power flow at the additional reverse gear, and the thin dotted line illustrates power flow in a third reverse gear via the third secondary gear plane S3, i.e., using a reverse crawler gear.

In the second embodiment, a direct forward gear may be achieved in the same way as in the first embodiment illustrated in Fig. 3. The common actuator 50 may in the direct forward gear set the countershaft gear engaging device 33' and the reverse gear engaging device 43 to a common neutral position, in which neither of the second countershaft gearwheel 32' and the reverse shaft 4 rotates.

The theoretical number of gear teeth on the reverse shaft gearwheels 41, 42 may in the second embodiment be determined in the same way as in the first embodiment, and the actual numbers of gear teeth may also in the second embodiment be set to differ from the theoretical numbers. However, in the second embodiment, it is beneficial to provide an actual number of gear teeth on the first reverse shaft gearwheel 41 which is smaller than the theoretical number, and an actual number of gear teeth on the second reverse shaft gearwheel 42 which is larger than the theoretical number of gear teeth. This is due to the power flow via the second primary gear plane P2 followed by the first primary gear plane P1 at reverse gear ratios, as illustrated in Fig. 6.

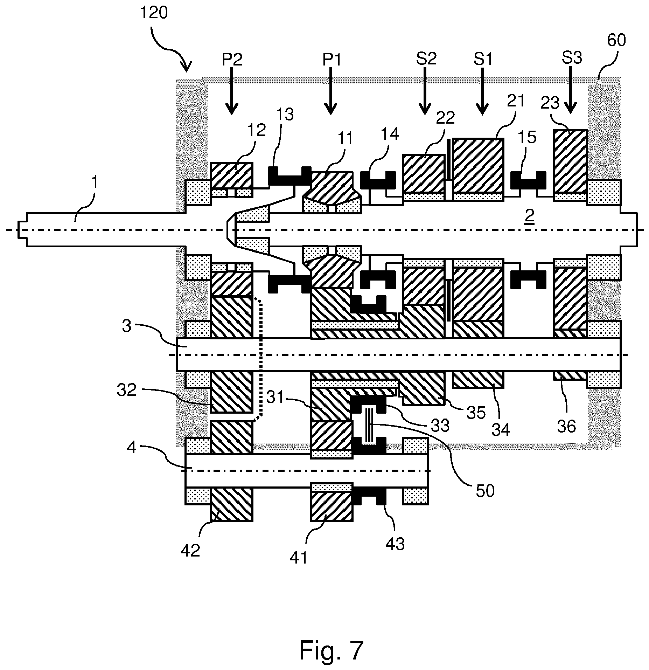

A third embodiment of the transmission 120 is illustrated in Fig. 7. The transmission 120 according to the third embodiment is an overdrive transmission and differs from the first embodiment in the configuration of the primary gear planes P1, P2. In the first primary gear plane P1, the first input gearwheel 11 and the first countershaft gearwheel 31 are in meshing engagement. The first reverse shaft gearwheel 41 and the first countershaft gearwheel 31 are also in meshing engagement with one another. The first input gearwheel 11 is not in meshing engagement with the first reverse shaft gearwheel 41.

In the second primary gear plane P2, the second reverse shaft gearwheel 42 and the second input gearwheel 12 are in meshing engagement with one another, as illustrated by the dotted line. The second reverse shaft gearwheel 42 is not in meshing engagement with the second countershaft gearwheel 32. The second countershaft gearwheel 32 is in meshing engagement with the second input gearwheel 12.

In the transmission 120 according to the third embodiment illustrated in Fig. 7, a top forward gear can be achieved by rotationally connecting the first input gearwheel 11 to the main shaft 2 and the second input gearwheel 12 to the input shaft 1, i.e., by setting both the first gear engaging device 13 and the second gear engaging device 14 to their second positions, i.e., to the left, while setting the reverse gear engaging device 43 to a position in which it does not rotationally connect the first reverse shaft gearwheel 41 to the reverse shaft 4, and setting the countershaft gear engaging device 33 to a position in which it rotationally connects the first countershaft gearwheel 31 to the second secondary countershaft gearwheel 35 and to the countershaft 3. In other words, the common actuator 50 may be set to its first position to the right. In the top forward gear, torque is transmitted from the input shaft 1 to the main shaft 2 via the second primary gear plane P2 followed by the first primary gear plane P1, i.e., via two gear meshes.

The transmission 120 according to the third embodiment can also be set to a direct forward gear, providing a larger speed reduction than the top forward gear. To set the transmission 120 to the direct forward gear, the first gear engaging device 13 is set to a first position, i.e. to the right, and the second gear engaging device 14 is set to a second position, i.e., to the left. The third gear engaging device 15 as well as the countershaft gear engaging device 33 and the reverse gear engaging device 43 are set to the neutral positions, whereby the countershaft 3 and the gearwheels 32, 34, 35, 36 that are fixed thereon are not drivingly connected to the input shaft 1.

Reverse gears at three different gear ratios can in the third embodiment be achieved by setting the first gear engaging device 13 to its first position and the common actuator 50 to the second position, in which it rotationally connects the first reverse shaft gearwheel 41 to the reverse shaft 4 and rotationally disconnects the first countershaft gearwheel 31 from the countershaft 3. This configuration is illustrated in Fig. 7. Hence, torque is transmitted from the input shaft 1 to the countershaft 3 via the first primary gear plane P1 followed by the second primary gear plane P2, i.e., via four gear meshes.

In the third embodiment, an actual number of gear teeth of the first reverse shaft gearwheel 41 should preferably be larger than the theoretical number of gear teeth of the first reverse shaft gearwheel 41, and an actual number of gear teeth of the second reverse shaft gearwheel 42 should preferably be smaller than the theoretical number of gear teeth of the second reverse shaft gearwheel 42. In each primary gear plane P1, P2, the theoretical number of gear teeth $z_{41,th}$, $z_{42,th}$ on the reverse shaft gearwheels 41, 42 can in the third embodiment be determined from the centre-to-centre distances $a_{mr}$, $a_{mc}$, $a_{cr}$ (see fig. 2b) and a known number of gear teeth $z_{11}$, $z_{12}$ of the input gearwheels 11, 12 and a known number of gear teeth $z_{31}$, $z_{32}$ of the countershaft gearwheels 31, 32 from equations 3 and 4 below:

$$\frac{a_{mr}}{a_{mc}} = \frac{z_{42,th} + z_{12}}{z_{32} + z_{12}} \qquad \text{(Eq. 3)}$$

$$\frac{a_{cr}}{a_{mc}} = \frac{z_{41,th} + z_{31}}{z_{11} + z_{31}} \qquad \text{(Eq. 4)}$$

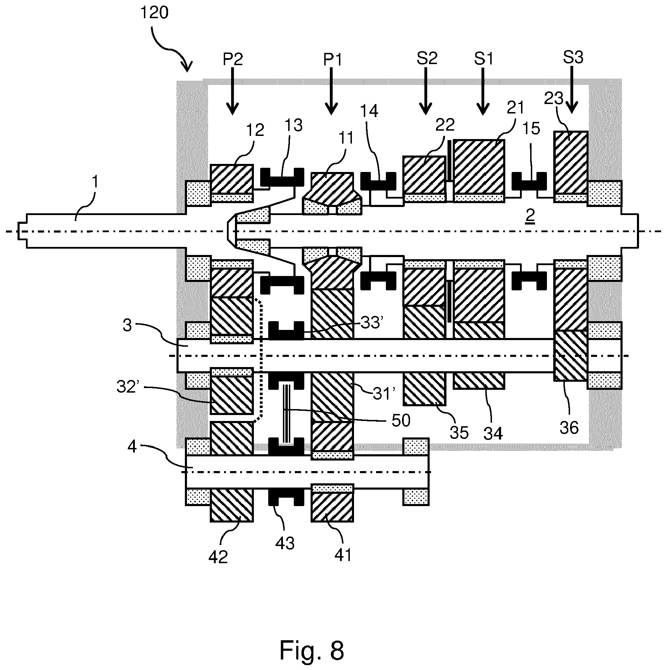

A transmission 120 according to a fourth embodiment is illustrated in Fig. 8. This embodiment is similar to the third embodiment and differs therefrom in the same way that the second embodiment differs from the first embodiment, i.e., in that the second countershaft gearwheel 32' of the second primary gear plane P2 is rotatably arranged on the countershaft 3, while the first countershaft gearwheel 31' is fixed on the countershaft 3. Hence, the countershaft gear engaging device 33' is herein arranged to selectively rotationally connect the second countershaft gearwheel 32' to the countershaft 3 so as to engage a forward gear of the transmission 120. The reverse gear engaging device 43 is movable in common with the countershaft gear engaging device 33' using a common actuator 50. Hence, in a first position to the right, the first reverse shaft gearwheel 41 is rotationally connected to the reverse shaft 4 and the second countershaft gearwheel 32' is rotationally disconnected from the countershaft 3. A reverse gear may be engaged, in which torque is transmitted from the input shaft 1 to the countershaft 3 via the second primary gear plane P2 followed by the first primary gear plane P1, i.e., via two gear meshes.

The transmission 120 according to the fourth embodiment can also be set to a direct forward gear in the same way as described above for the third embodiment, providing a larger speed reduction than the top forward gear. The common actuator 50 may in the direct forward gear set the countershaft gear engaging device 33' and the reverse gear engaging device 43 to a common neutral position, in which neither of the second countershaft gearwheel 32' and the reverse shaft 4 rotates.

In the fourth embodiment, it is beneficial to provide an actual number of gear teeth on the first reverse shaft gearwheel 41 which is smaller than the theoretical number of gear teeth, and an actual number of gear teeth on the second reverse shaft gearwheel 42 which is larger than the theoretical number of gear teeth. The theoretical numbers of gear teeth may be determined from equations 3 and 4 as described in connection with the third embodiment.

The transmission control unit 200 is configured for controlling the transmission 120, in particular for controlling the gear engaging devices 13, 14, 15, 33, 43. The transmission control unit 200 is configured to control the countershaft gear engaging device 33 to a neutral position when a direct forward gear of the transmission 120 according to any one of the illustrated embodiments is engaged. This drivingly disconnects the countershaft 3 and/or the second countershaft gearwheel 32, 32' from the input shaft 1. In the illustrated embodiments, this thereby reduces splash losses that would otherwise result from rotation of those parts.

The transmission control unit 200 may be an electronic control unit including a microprocessor, a microcontroller, a programmable digital signal processor or another programmable device. Thus, the transmission control unit 200 comprises electronic circuits and connections (not shown) as well as processing circuitry (not shown) such that the transmission control unit 200 can communicate with different parts of the vehicle 100 or with different control units of the vehicle 100, such as with various sensors, systems and control units, in particular with one or more electronic control units (ECUs) controlling electrical systems or subsystems in the vehicle 100, such as an engine control unit of the vehicle 100. The transmission control unit 200 may comprise modules in either hardware or software, or partially in hardware or software, and communicate using known transmission buses such a CAN-bus and/or wireless communication capabilities. The processing circuitry may be a general-purpose processor or a specific processor. The transmission control unit 200 may comprise a non-transitory memory for storing computer program code and data. Thus, the skilled person realizes that the transmission control unit 200 may be embodied by many different constructions. Although herein illustrated as a single unit, the transmission control unit 200 may be formed of several different control units configured to communicate with each other. The transmission control unit 200 may further comprise actuators, such as electric, pneumatic, or hydraulic actuators for controlling the gear engaging devices 13, 14, 15, 33, 43, and electronic circuitry for controlling the actuators and for communicating with other systems and control units of the vehicle 100, etc. For example, the common actuator 50 may form part of the transmission control unit 200 or be controlled thereby.

In all illustrated embodiments, a range gear (not shown) may be provided for drivingly connecting the main shaft 2 to an output shaft (not shown) at one of at least two gear ratios. The range gear may, purely by way of example, comprise a planetary gear set.

It is to be understood that the present invention is not limited to the embodiments described above and illustrated in the drawings; rather, the skilled person will recognize that many changes and modifications may be made within the scope of the appended claims.

## Claims

1. A transmission (120) for a vehicle (100), comprising:

   - an input shaft (1), a main shaft (2), and a countershaft (3), the main shaft (2) being coaxial with the input shaft (1) and the countershaft (3) being parallel therewith,
   - first and second primary gear planes (P1, P2) arranged for torque transfer between the input shaft (1) and the countershaft (3),
   - at least one secondary gear plane (S1, S2, S3) arranged for torque transfer between the countershaft (3) and the main shaft (2),
   - wherein the transmission (120) further comprises a reverse shaft (4) arranged in parallel with the main shaft (2), wherein the first primary gear plane (P1) comprises a first reverse shaft gearwheel (41) arranged on the reverse shaft (4), and wherein the second primary gear plane (P2) comprises a second reverse shaft gearwheel (42) arranged on the reverse shaft (4), the second reverse shaft gearwheel (42) being selectively rotationally connectable to the first reverse shaft gearwheel (41) so as to engage a reverse gear of the transmission (120).

2. The transmission according to claim 1, wherein:

   - the first primary gear plane (P1) comprises a first input gearwheel (11) arranged coaxially with the input shaft (1), and a first countershaft gearwheel (31) arranged on the countershaft (3),
- the second primary gear plane (P2) comprises a second input gearwheel (12) arranged coaxially with the input shaft (1), and a second countershaft gearwheel (32) arranged on the countershaft (3).

3. The transmission according to claim 2, wherein the first reverse shaft gearwheel (41) and the first countershaft gearwheel (31) are in meshing engagement with one another, and wherein the second reverse shaft gearwheel (42) and the second input gearwheel (12) are in meshing engagement with one another, or
wherein the second reverse shaft gearwheel (42) and the second countershaft gearwheel (32) are in meshing engagement with one another, and wherein the first reverse shaft gearwheel (41) and the first input gearwheel (11) are in meshing engagement with one another.

4. The transmission according to claim 2 or 3, wherein one of the first and second countershaft gearwheels (31', 32) is rotationally fixed to the countershaft (3), and the other one of the first and second countershaft gearwheels (31, 32') is a rotatable countershaft gearwheel (31, 32') arranged rotatably on and selectively rotationally connectable to the countershaft (3) so as to engage a forward gear.

5. The transmission according to any one of claims 2-4, further comprising a reverse gear engaging device (43) configured to selectively rotationally connect and disconnect the first and second reverse shaft gearwheels (41, 42) to/from one another, and a countershaft gear engaging device (33) configured to selectively rotationally connect and disconnect the rotatable countershaft gearwheel (31, 32') to/from the countershaft (3).

6. The transmission according to claim 5, wherein the countershaft gear engaging device (33) is configured to rotationally connect the rotatable countershaft gearwheel (31, 32') to the countershaft (3) only when the reverse gear engaging device (43) is in a neutral position, and wherein the reverse gear engaging device (43) is configured to rotationally connect the first and second reverse shaft gearwheels (41, 42) to one another only when the countershaft gear engaging device (33) is in a neutral position.

7. The transmission according to claim 5 or 6, wherein the reverse and countershaft gear engaging devices (43, 33) are arranged to be movable in common by a single actuator (50).

8. The transmission according to any one of claims 5-7, wherein the reverse and countershaft gear engaging devices (43, 33) are selectively movable to a common neutral position in which the first and second reverse shaft gearwheels (41, 42) are rotationally disconnected from one another and in which the rotatable countershaft gearwheel (31) is rotationally disconnected from the countershaft (3).

9. The transmission according to any one of the preceding claims, wherein a number of gear teeth of the first reverse shaft gearwheel (41) differs from a theoretical number of gear teeth of the first reverse shaft gearwheel (41) by at least one gear tooth, such as by a number of 1-3 gear teeth, wherein the theoretical number of gear teeth is determined from a number of gear teeth of the first input gearwheel (11) and of the first countershaft gearwheel (31), and from centre-to-centre distances $(a_{mr}, a_{mc}, a_{cr})$ between the gearwheels (11, 31, 41) of the first primary gear plane (P1).

10. The transmission according to any one of the preceding claims, wherein a number of gear teeth of the second reverse shaft gearwheel (42) differs from a theoretical number of gear teeth of the second reverse shaft gearwheel (42) by at least one gear tooth, such as by a number of 1-3 gear teeth, wherein the theoretical number of gear teeth is determined from a number of gear teeth of the second input gearwheel (12) and of the second countershaft gearwheel (32), and from centre-to-centre distances $(a_{mr}, a_{mc}, a_{cr})$ between the gearwheels (12, 32, 42) of the second primary gear plane (P2).

11. The transmission according to claim 10 in combination with claim 9, wherein:

- the number of gear teeth of the first reverse shaft gearwheel (41) is smaller than the theoretical number of gear teeth of the first reverse shaft gearwheel (41), and the number of gear teeth of the second reverse shaft gearwheel (42) is larger than the theoretical number of gear teeth of the second reverse shaft gearwheel (42), or
- the number of gear teeth of the first reverse shaft gearwheel (41) is larger than the theoretical number of gear teeth of the first reverse shaft gearwheel (41), and the number of gear teeth of the second reverse shaft gearwheel (42) is smaller than the theoretical number of gear teeth of the second reverse shaft gearwheel (42).

12. The transmission according to claim 11 when dependent on claim 4, wherein the rotatable countershaft gearwheel (31, 32') is located in the one of the primary gear planes (P1, P2) in which the number of gear teeth of the reverse shaft gearwheel (41, 42) is larger than the theoretical number of gear teeth.

13. The transmission according to any one of the preceding claims, wherein the at least one secondary gear plane (S1, S2, Sr) comprises at least a first secondary gear plane (S1), and a second secondary gear plane (S2), and preferably a third secondary gear plane (S3).

14. A transmission control unit (200) for controlling a transmission (120) according to any one of claims 5-8, wherein the transmission control unit (200) is configured to control the countershaft gear engaging device (33) to a neutral position when a direct forward gear of the transmission (120) is engaged.

15. A vehicle (100) comprising a transmission (120) according to any one of claims 1-13.

Fig. 1

120

P2   P1   S2   S1   S3   60

12   13   1a   11   14   22   21   23   15

1

2a

2

3

32   31   35   33   34   36

50

4

42   41   43

Fig. 2a

4   1, 2

$a_{mr}$

$a_{mc}$

$a_{cr}$

3

Fig. 2b

Fig. 3

Fig. 4

Fig. 5

Fig. 6

Fig. 7

Fig. 8

Europäisches
Patentamt

European
Patent Office

Office européen
des brevets

# EUROPEAN SEARCH REPORT

Application Number

**EP 22 19 1074**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/115133 A1 (SCANIA CV ABP [SE]; NILSSON DAG [SE]) 25 September 2008 (2008-09-25) | 1-10,12, 13,15 | INV. F16H3/097 F16H3/091 F16H3/08 |
| Y | * page 1, lines 7-9; figures 1,2 * * page 7, lines 1-5 * * page 8, lines 4-16 * ----- | 11 | |
| X | US 4 635 495 A (WHITE BASIL [US]) 13 January 1987 (1987-01-13) * column 2, lines 35-40; figures 1,2; table 1 * ----- | 1-5,13, 15 | |
| X | US 2014/256503 A1 (GRANT STEVEN D [US]) 11 September 2014 (2014-09-11) * paragraphs [0043] - [0047]; figures 9,15 * ----- | 1-6,8, 13-15 | |
| Y | EP 0 443 576 A1 (KERPE STEFAN [DE]) 28 August 1991 (1991-08-28) | 11 | |
| A | * page 6, line 15 - page 7, line 23; figures 2,3 * ----- | 9,10,12 | TECHNICAL FIELDS SEARCHED (IPC) |
| A | DE 10 2011 005532 A1 (ZAHNRADFABRIK FRIEDRICHSHAFEN [DE]) 20 September 2012 (2012-09-20) * paragraph [0021] * ----- | 9,10,12 | F16H |
| A | US 5 178 039 A (SHIRLEY RALPH E [US] ET AL) 12 January 1993 (1993-01-12) * column 5, lines 51-60 * ----- | 9,10,12 | |

The present search report has been drawn up for all claims

| Place of search | Date of completion of the search | Examiner |
|---|---|---|
| Munich | 20 April 2023 | Martínez Hurtado, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

Europäisches
Patentamt

European
Patent Office

Office européen
des brevets

**Application Number**

**EP 22 19 1074**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

# LACK OF UNITY OF INVENTION
## SHEET B

The Search Division considers that the present European patent application does not comply with the requirements of unity of invention and relates to several inventions or groups of inventions, namely:

    1. claims: 1-8, 13-15

        Transmission for a vehicle comprising a reverse gear
                    ---

    2. claims: 9-12

        Number of gear teeth of a gear pair.
                    ---

## ANNEX TO THE EUROPEAN SEARCH REPORT
## ON EUROPEAN PATENT APPLICATION NO.

EP 22 19 1074

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2023

| Patent document cited in search report | | Publication date | Patent family member(s) | | Publication date |
|---|---|---|---|---|---|
| WO 2008115133 | A1 | 25-09-2008 | AT | 508297 T | 15-05-2011 |
| | | | BR | PI0806905 A2 | 29-04-2014 |
| | | | CN | 101668965 A | 10-03-2010 |
| | | | EP | 2137431 A1 | 30-12-2009 |
| | | | JP | 5220773 B2 | 26-06-2013 |
| | | | JP | 2010520983 A | 17-06-2010 |
| | | | WO | 2008115133 A1 | 25-09-2008 |
| US 4635495 | A | 13-01-1987 | DE | 3634327 A1 | 23-04-1987 |
| | | | GB | 2181800 A | 29-04-1987 |
| | | | JP | H0550605 B2 | 29-07-1993 |
| | | | JP | S6298049 A | 07-05-1987 |
| | | | US | 4635495 A | 13-01-1987 |
| US 2014256503 | A1 | 11-09-2014 | NONE | | |
| EP 0443576 | A1 | 28-08-1991 | AT | 105224 T | 15-05-1994 |
| | | | DE | 4105483 A1 | 29-08-1991 |
| | | | DK | 0443576 T3 | 19-09-1994 |
| | | | EP | 0443576 A1 | 28-08-1991 |
| | | | ES | 2052292 T3 | 01-07-1994 |
| DE 102011005532 | A1 | 20-09-2012 | CN | 103415411 A | 27-11-2013 |
| | | | DE | 102011005532 A1 | 20-09-2012 |
| | | | EP | 2686186 A1 | 22-01-2014 |
| | | | US | 2013345018 A1 | 26-12-2013 |
| | | | WO | 2012123171 A1 | 20-09-2012 |
| US 5178039 | A | 12-01-1993 | AT | 127405 T | 15-09-1995 |
| | | | CA | 2087305 A1 | 23-07-1993 |
| | | | EP | 0552673 A1 | 28-07-1993 |
| | | | FI | 930222 A | 23-07-1993 |
| | | | JP | H05263882 A | 12-10-1993 |
| | | | US | 5178039 A | 12-01-1993 |

EPO FORM P0459

For more details about this annex : see Official Journal of the European Patent Office, No. 12/82